# FASCICULE DE BREVET EUROPEEN

(11) **EP 4 340 677 B1**
(45) Date de publication et mention de la délivrance du brevet: **25.06.2025**
(21) Numéro de dépôt: 22730420.1
(22) Date de dépôt: 20.05.2022
(51) Int. Cl.: A47B 3/00, A63F 7/06, A63D 15/00, A47B 3/08

(54) **TABLE DE JEU, NOTAMMENT POUR LA PRATIQUE DU BILLARD**
SPIELTISCH, INSBESONDERE ZUM SPIELEN VON BILLARD
GAMES TABLE, IN PARTICULAR FOR PLAYING BILLIARDS

(30) Priorité: 21.05.2021 FR 2105333
(43) Date de publication de la demande: 27.03.2024
(73) Titulaire: Decathlon, 59650 Villeneuve d'Ascq (FR)
(72) Inventeur: GEVAERT, Guillaume, 59650 Villeneuve d'Ascq (FR); GARIT, Denis, 59650 Villeneuve d'Ascq (FR); DANEL, Maxime, 59650 Villeneuve d'Ascq (FR)
(74) Mandataire: Sayettat, Julien Christian
(86) Numéro de dépôt international: PCT/EP2022/063784
(87) Numéro de publication internationale: WO 2022/243539

(56) Documents cités:
- ES-U- 1 005 075
- FR-A1- 2 390 128
- FR-A2- 2 368 917
- US-A- 5 020 799
- US-A- 5 056 780

## Description

L'invention concerne une table de jeu comprenant un plateau portant une surface supérieure de jeu, ainsi qu'une structure de piétement sur laquelle ledit plateau est monté.

Elle s'applique en particulier à une table de jeu dont la surface supérieure est agencée pour la pratique du billard. Cette table peut notamment être destinée à une utilisation en extérieur, la surface supérieure étant alors préférentiellement résistante aux intempéries.

Pour pouvoir ranger la table de jeu dans un encombrement réduit entre deux utilisations, le document US-5 020 799 prévoit un plateau en deux parties qui sont articulées sur la structure de piètement entre : une position horizontale d'utilisation dans la continuité l'une de l'autre pour former la surface supérieure de jeu, et une position rabattue verticalement l'une contre l'autre.

Toutefois, cette solution de rangement ne donne pas entièrement satisfaction en ce que, comme notamment prévu par le document EP-3 169 415, elle nécessite la mise en œuvre de moyens complexes pour assurer une continuité de la surface de jeu qui soit compatible avec la pratique du billard, notamment en venant refermer l'interface entre les deux parties du plateau en position horizontale.

Pour résoudre ce problème, on connait du document ES-1 005 075 une table de jeu dont le plateau s'étend transversalement de part et d'autre d'un axe longitudinal en formant une surface supérieure de jeu qui est continue, ledit plateau étant monté sur la structure de piètement par l'intermédiaire d'un mécanisme de basculement autour dudit axe longitudinal entre une position horizontale d'utilisation et une position dressée de rangement.

Pour assurer la stabilité de la table de jeu en position d'utilisation et son déplacement en position de rangement, cette antériorité prévoit d'équiper la structure de piètement avec des pieds et des roulettes.

En particulier, les pieds peuvent être plus ou moins vissés sous la structure de piètement pour être en appui sur le sol lors de l'utilisation de la table de jeu et en retrait pour mettre les roulettes en appui sur le sol afin de permettre le déplacement de la table en position de rangement.

Toutefois, cette solution ne donne pas entièrement satisfaction en ce qu'elle est fastidieuse à utiliser dans la mesure où elle nécessite un vissage / dévissage de chacun des pieds pour assurer respectivement la stabilité et le déplacement de la table de jeu.

En outre, la fiabilité du passage d'une position stable d'utilisation à une position de rangement déplaçable n'est pas garantie dans la mesure où l'utilisateur doit effectuer deux manipulations distinctes pour, d'une part, utiliser / ranger la table par basculement du plateau et, d'autre part, stabiliser / pouvoir déplacer ladite table par dévissage / vissage des pieds.

Enfin, le vissage de chacun des pieds confère un réglage fastidieux de la stabilité et de l'horizontalité de la surface de jeu pour permettre son utilisation de façon satisfaisante.

L'invention vise à perfectionner l'art antérieur en proposant notamment une table dont le plateau présente une surface de jeu continue qui est basculable entre une position d'utilisation et une position de rangement, dans laquelle ledit basculement induit de façon simple et fiable respectivement la stabilité de la table pour son utilisation et sa possibilité de déplacement par roulement une fois rangée.

A cet effet, l'invention propose une table de jeu comprenant un plateau portant une surface supérieure de jeu qui s'étend transversalement de part et d'autre d'un axe longitudinal dudit plateau, ladite table comprenant une structure de piètement présentant un cadre supérieur sur lequel ledit plateau est monté par l'intermédiaire d'un mécanisme de basculement autour dudit axe longitudinal entre une position horizontale d'utilisation et une position dressée de rangement, ladite structure de piètement comprenant un cadre d'appui au sol et un chariot de roulement sur ledit sol, le cadre d'appui et le chariot de roulement étant associés par un mécanisme d'articulation permettant leur déplacement relatif réversiblement entre :
- une configuration stable de la structure de piètement dans laquelle le cadre d'appui est disposé sur le sol en dessous du chariot de roulement qui est disposé à distance dudit sol ; et
- une configuration de déplacement de la structure de piètement dans laquelle le chariot de roulement est disposé sur le sol en dessous du cadre d'appui qui est disposé à distance dudit sol ;
ladite table comprenant un dispositif d'actionnement du mécanisme d'articulation, ledit dispositif d'actionnement comprenant au moins un organe reliant le plateau et le mécanisme d'articulation, ledit organe étant déplacé par le basculement dudit plateau en étant agencé pour mettre la structure de piètement en configuration stable - respectivement de déplacement - lorsque le plateau est en position d'utilisation - respectivement de rangement -.

D'autres particularités et avantages de l'invention apparaîtront dans la description qui suit, faite en référence aux figures annexées, dans lesquelles :
[Fig.1] représente schématiquement et en perspective une table de jeu selon un mode de réalisation de l'invention, le plateau étant en position d'utilisation avec la structure de piétement en configuration stable ;
[Fig.2a] et
[Fig.2b] représentent chacune une partie de la structure de piétement de la table de jeu de la figure 1, la figure 2a représentant les cadres supérieur et d'appui au sol et la figure 2b représentant le chariot de roulement sur le sol ;
[Fig.3] est une représentation analogue à la figure 1 vue depuis un bord transversal du plateau de jeu ;
[Fig.4] est un zoom partiel et en perspective de la figure 3 montrant plus particulièrement le mécanisme d'articulation à l'interface entre le cadre d'appui et le chariot de roulement ;
[Fig.5a] et
[Fig.5b] représentent la table des figures précédentes avec le plateau en position de rangement et la structure de piétement en configuration de déplacement, respectivement en perspective (figure 5a) et en vue depuis un bord transversal du plateau de jeu (figure 5b) ;
[Fig.6] est un zoom partiel et en perspective de la figure 5b montrant plus particulièrement le montage du mécanisme d'articulation sur le cadre d'appui.

En relation avec ces figures, on décrit ci-dessous une table de jeu comprenant un plateau 1 portant une surface supérieure de jeu 2 qui s'étend transversalement de part et d'autre d'un axe longitudinal 18 dudit plateau.

Dans la description, les termes "longitudinal" et "transversal" sont pris en relation avec l'axe 18, le terme "longitudinal" désignant une direction parallèle à cet axe et le terme "transversal" désignant une direction perpendiculaire à cet axe.

Dans le mode de réalisation représenté, le plateau 1 présente une géométrie sensiblement rectangulaire, avec quatre coins arrondis 3, en portant une surface supérieure de jeu 2 qui est agencée pour la pratique du billard.

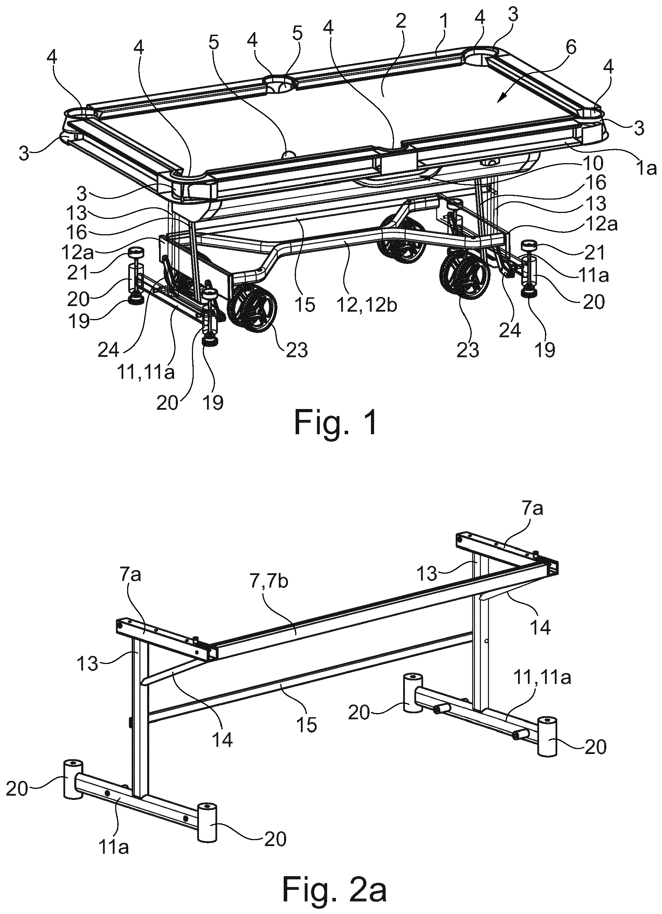

En particulier, le plateau 1 présente six trous 4 qui sont répartis régulièrement le long de sa périphérie, en étant disposés dans chaque coin 3 et au milieu de chaque bord longitudinal dudit plateau, lesdits trous étant agencés pour recueillir des boules 5 de billard, comme représenté sur la figure 1. Par ailleurs, la surface de jeu 2 est recouverte d'un tapis 6 qui peut présenter des inscriptions et/ou des motifs adapté(e)s au billard.

En variante non représentée, la surface supérieure de jeu 2 peut être agencée pour la pratique d'un autre type de jeu et/ou de sport, par exemple le tennis de table ou un jeu de palets.

De façon avantageuse, la table est adaptée pour une utilisation en extérieur, par exemple sur une terrasse ou dans un jardin. Pour ce faire, le plateau 1 peut présenter une structure en nid d'abeille disposée entre deux couches d'un revêtement polymère, par exemple en polyéthylène, afin de renforcer à la fois la rigidité mécanique et la résistance à l'eau dudit plateau. De même, le tapis de jeu 6 peut être à base d'un matériau textile imperméable et résistant aux UV.

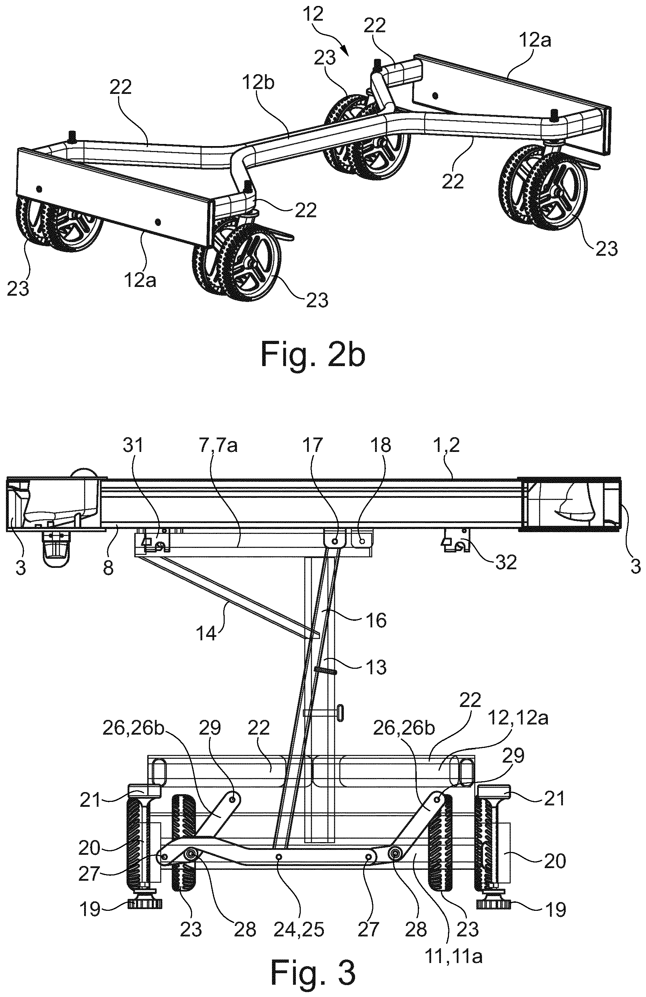

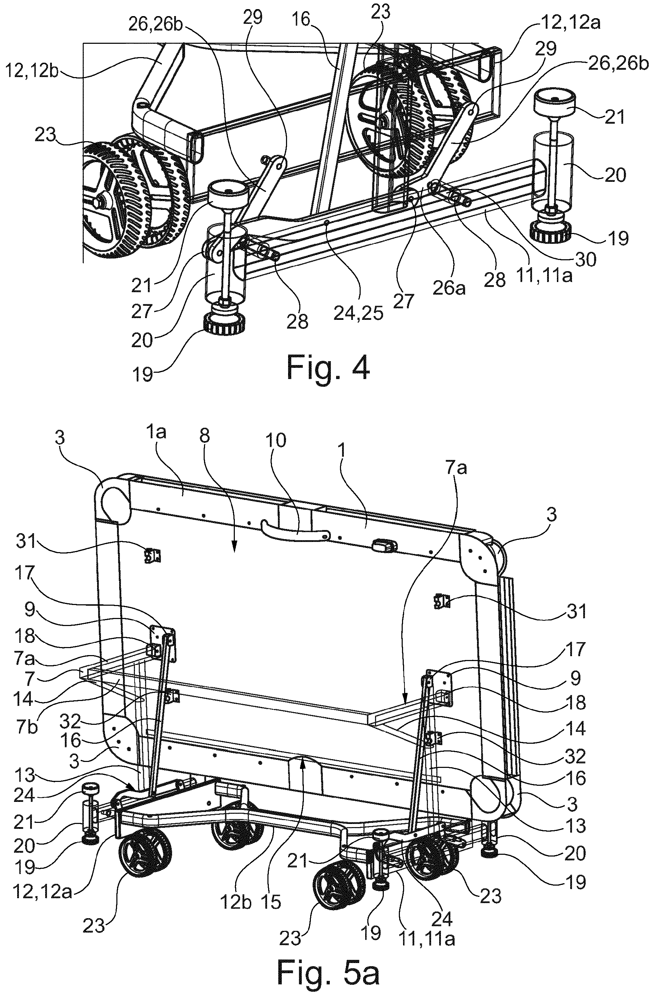

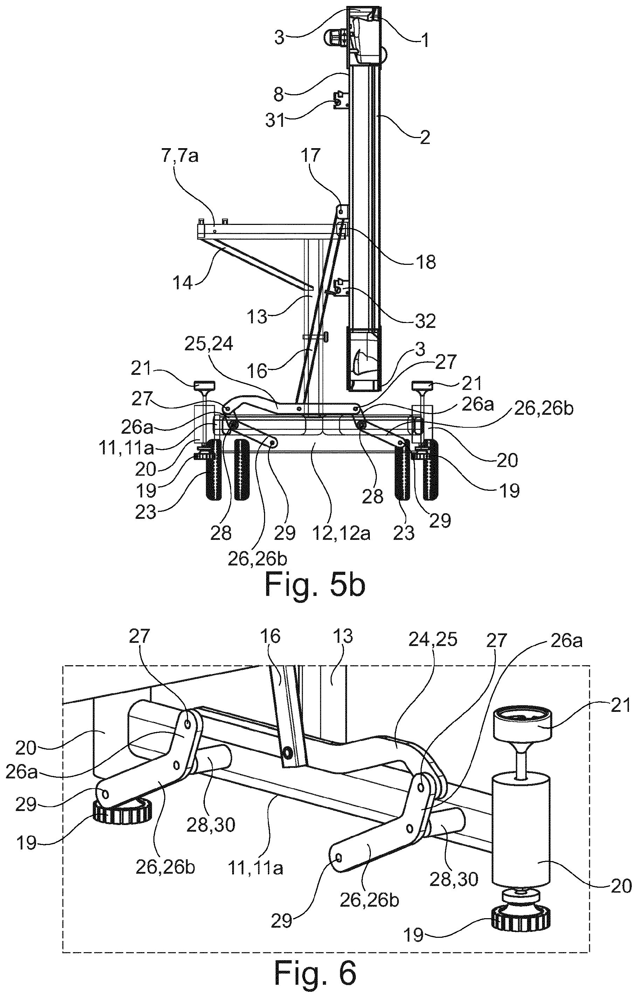

La table comprend une structure de piétement qui présente un cadre supérieur 7 sur lequel le plateau de jeu 1 est monté par l'intermédiaire d'un mécanisme de basculement autour de l'axe longitudinal 18 entre une position horizontale d'utilisation (figures 1, 3) et une position dressée de rangement (figures 5a, 5b).

En particulier, le plateau 1 forme une surface supérieure de jeu 2 qui est continue, notamment en demeurant en l'état lors du basculement dudit plateau entre ses positions d'utilisation et de rangement.

A l'opposée de la surface de jeu 2, le plateau 1 présente une surface inférieure 8 qui est équipée d'au moins une platine 9 montée en rotation sur le cadre supérieur 7 pour former le mécanisme de basculement.

Sur les figures, le cadre supérieur 7 présente deux traverses latérales 7a reliés par un longeron longitudinal 7b pour présenter une configuration en U s'étendant horizontalement, les extrémités libres desdites traverses étant équipées du mécanisme de basculement du plateau 1 entre une position horizontale d'utilisation en appui sur le cadre supérieur 7 et une position verticale de rangement perpendiculairement audit cadre.

Cette configuration du cadre supérieur 7 permet de ranger le plateau 1 dans une position verticale par rapport au sol afin de pouvoir limiter au maximum la dimension transversale de la table rangée. En variante, en position dressée de rangement, le plateau peut former un angle, par exemple de +/- 20°, autour de cette direction verticale.

En relation avec les figures, la surface inférieure 8 du plateau 1 est équipée de deux platines 9 montées chacune en rotation sur l'extrémité libre de respectivement une traverse 7a pour former le mécanisme de basculement.

De façon avantageuse, le plateau 1 présente un bord longitudinal 1a qui est disposé en hauteur en position dressée (figure 5a), ledit bord étant équipé d'un organe de préhension 10 facilitant le basculement dudit plateau. Comme représenté sur les figures 1 et 5a, l'organe de préhension 10 comprend une poignée qui est fixée sous la surface inférieure 8 le long du bord longitudinal 1a correspondant.

La structure de piétement présente un cadre inférieur 11 d'appui au sol, le cadre supérieur 7 étant relié audit cadre d'appui par deux poteaux verticaux 13. En particulier, les poteaux verticaux 13 sont reliés chacun au voisinage de respectivement une extrémité d'une traverse 7a du cadre supérieur 7, chaque poteau 13 étant en outre relié au voisinage de l'autre extrémité de ladite traverse par un support incliné 14. En outre, chaque poteau 13 est relié directement à l'extrémité d'une traverse 7a associée au longeron 7b, et à l'extrémité libre de ladite traverse par le support incliné 14.

Pour améliorer la stabilité de la structure de piétement, les poteaux 13 sont reliés par une barre horizontale 15 de maintien qui s'étend longitudinalement entre lesdits poteaux, chaque extrémité de ladite barre étant fixée à mi-hauteur sur respectivement un poteau 13.

La structure de piétement présente un chariot de roulement 12 qui est associé au cadre d'appui 11 par un mécanisme d'articulation 24 permettant leur déplacement relatif réversiblement entre :
- une configuration stable de la structure de piétement, dans laquelle le cadre d'appui 11 est disposé sur le sol en dessous du chariot de roulement 12 qui est disposé à distance dudit sol (figures 1, 3, 4) ; et
- une configuration de déplacement de la structure de piétement, dans laquelle le chariot de roulement 12 est disposé sur le sol en dessous du cadre d'appui 11 qui est disposé à distance dudit sol (figures 5a, 5b).

Pour permettre le basculement de la structure de piétement d'une configuration à l'autre, la table comprend un dispositif d'actionnement du mécanisme d'articulation 24, ledit dispositif d'actionnement comprenant au moins un organe 16, par exemple sous la forme d'une bielle dans le mode de réalisation représenté, reliant le plateau 1 et le mécanisme d'articulation 24, ledit organe étant déplacé par le basculement dudit plateau en étant agencé pour mettre la structure de piétement en configuration stable - respectivement de déplacement - lorsque le plateau 1 est en position d'utilisation - respectivement de rangement.

Ainsi, en manipulant uniquement et simplement le basculement du plateau 1, l'utilisateur configure simultanément la structure de piétement entre son état stable d'utilisation de la table de jeu et son état permettant le déplacement par roulement de la table rangée. De façon avantageuse, le changement de configuration de la structure de piètement ne modifie pas la géométrie d'appui du cadre 11, ce qui permet de conserver un réglage dudit cadre conférant la stabilité et l'horizontalité de la surface de jeu 2.

Dans le mode de réalisation représenté, le dispositif d'actionnement comprend deux organes 16 montés chacune à proximité de respectivement un poteau vertical 13, chaque organe 16 présentant une extrémité supérieure qui est montée en rotation sous le plateau 1 selon un axe longitudinal de rotation 17 qui est décalé de l'axe de basculement 18 pour induire un déplacement des organes 16 par le basculement dudit plateau.

En particulier, chaque organe 16 est monté en rotation sur la platine 9 adjacente du plateau 1 de sorte que, en position dressée de rangement, l'axe 17 de rotation dudit organe est disposé au-dessus de l'axe de basculement 18, afin d'induire un enfoncement de l'organe 16 lors du basculement du plateau 1 en position horizontale d'utilisation.

Sur les figures, le cadre d'appui 11 est relié fixement au cadre supérieur 7, le chariot de roulement 12 étant déplaçable par rapport audit cadre d'appui au moyen du mécanisme d'articulation 24 entre une position haute et une position basse pour pouvoir mettre la structure de piétement réversiblement en configuration stable et de déplacement.

En variante non représentée, le chariot 12 peut être fixé au cadre supérieur 7 et le cadre d'appui 11 peut être déplaçable au moyen du mécanisme d'articulation 24 pour pouvoir modifier la structure de piétement d'une configuration à l'autre.

Le chariot de roulement 12 et le cadre d'appui 11 présentent chacun deux traverses latérales 11a, 12a qui sont espacées longitudinalement, chaque traverse 11a du cadre d'appui 11 étant fixée à l'extrémité inférieure de respectivement un poteau vertical 13, les traverses 12a du chariot 12 étant disposées dans l'espace longitudinal formé entre les traverses 11a dudit cadre d'appui.

Le cadre d'appui 11 porte au moins un pied 19 dont la hauteur est ajustable, ce qui permet d'ajuster l'horizontalité du plateau 1 de jeu selon l'inclinaison du sol sur lequel la table est utilisée, en particulier lors d'une utilisation de ladite table en extérieur.

Pour ce faire, les extrémités des traverses 11a du cadre d'appui 11 portent chacune un module 20 dans lequel un pied 19 est monté au moyen d'un mécanisme 21 de vissage manuel qui permet d'adapter sa hauteur de saillie sous ledit cadre. En particulier, chaque mécanisme 21 présente une poignée supérieure que l'utilisateur peut saisir pour effectuer le vissage du pied 19 correspondant.

De façon avantageuse, une fois le vissage des pieds 19 effectué pour obtenir une stabilité et une horizontalité de la surface de jeu 2 permettant son utilisation de façon satisfaisante, le basculement du plateau 1 et donc le changement de configuration de la structure de piètement n'ont pas d'influence sur ce réglage.

Les traverses 12a du chariot de roulement 12 sont reliées fixement par au moins un longeron 12b, les traverses 11a du cadre d'appui 11 étant associées à respectivement une traverse 12a du chariot de roulement 12. En relation avec la figure 2b, le chariot 12 comprend un longeron longitudinal 12b dont chaque extrémité se divise en deux branches 22, l'extrémité libre de chaque branche 22 étant fixée à respectivement une extrémité de la traverse 12a adjacente.

Le chariot de roulement 12 porte des roues 23 qui sont disposées pour permettre le déplacement de la table par roulement sur le sol. Sur les figures, le chariot 12 comprend quatre paires de roues 23 qui sont chacune montées en rotation autour d'un axe vertical sur respectivement une branche 22 du longeron central 12b, afin de pouvoir pivoter chacune indépendamment autour de son axe vertical pour pouvoir diriger la table lors de son roulement sur le sol.

Les traverses 11a, 12a du cadre d'appui 11 et du chariot de roulement 12 sont associées de chaque côté par respectivement un mécanisme d'articulation 24 actionné par un organe 16, chaque mécanisme d'articulation 24 étant disposé à l'interface desdites traverses.

En relation avec les figures 3, 4, 5b et 6, chaque mécanisme d'articulation 24 comprend une barre d'actionnement 25 sur laquelle l'extrémité inférieure de l'organe 16 adjacent est montée en rotation, ladite barre présentant deux extrémités latérales portant chacune une biellette 26 en rotation suivant un premier axe longitudinal 27.

Chacune des biellettes 26 est montée en rotation suivant un deuxième axe longitudinal 28 de rotation sur le cadre d'appui 11 et suivant un troisième axe 29 de rotation sur le chariot de roulement 12, lesdits axes étant disposés de sorte que le déplacement de la barre 25 par l'organe 16 induise le déplacement relatif du chariot de roulement 12 et du cadre d'appui 11.

En particulier, chaque barre d'actionnement 25 s'étend sur une dimension transversale entre ses extrémités latérales, l'extrémité inférieure de l'organe 16 étant montée en rotation au voisinage de la partie centrale de ladite barre.

Chaque biellette 26 présente un premier bras 26a s'étendant entre le premier axe 27 et un pivot 30 définissant l'un parmi les deuxième 28 et troisième 29 axe de rotation, et un deuxième bras 26b s'étendant entre le pivot 30 et l'autre parmi les deuxième 28 et troisième 29 axe de rotation.

Dans le mode de réalisation représenté, le pivot 30 définit le deuxième axe de rotation 28, autour duquel le chariot 12 est monté mobile par rapport au cadre d'appui 11 entre les configurations stable et de déplacement. Par ailleurs, les bras 26a, 26b sont reliés par un coude portant le pivot 30, le deuxième bras 26b présentant une longueur supérieure à la longueur du premier bras 26a pour pouvoir bénéficier d'un effet de bras de levier.

Les biellettes 26 sont agencées pour, lorsque l'utilisateur bascule le plateau 1 dans l'une ou l'autre de ses positions, transformer le déplacement de l'organe 16 en un déplacement vertical de la barre d'actionnement 25 par rotation desdites biellettes autour du pivot 30 pour passer réversiblement d'une configuration dans laquelle l'axe 29 porté par le deuxième bras 26b est disposé au dessous dudit pivot, correspondant à la configuration de roulement (figures 5b, 6), à une configuration dans laquelle ledit axe est disposé au-dessus dudit pivot, correspondant à la configuration stable (figures 3, 4).

En particulier, la longueur du deuxième bras 26b est agencée pour permettre un déplacement du chariot 12 sur une hauteur qui est suffisamment importante pour assurer un bon écart de hauteur entre ledit chariot et le cadre d'appui 11, afin de permettre :
- en configuration stable, d'écarter les roues 23 du sol d'une hauteur suffisamment grande pour éviter tout contact desdites roues avec ledit sol ; et
- en configuration de roulement, d'écarter les pieds 19 du sol d'une hauteur suffisamment grande pour éviter que lesdits pieds n'entravent le roulement de la structure de piétement sur ledit sol.

Le plateau 1 est équipé d'au moins un moyen 31, 32 de verrouillage dans l'une de ses positions horizontale d'utilisation ou dressée de rangement, afin d'éviter tout basculement intempestif dudit plateau vers l'autre position, notamment de la position de rangement vers la position d'utilisation.

Pour ce faire, le cadre supérieur 7 et/ou l'organe 16 est agencé pour coopérer avec le moyen de verrouillage 31, 32. Dans le mode de réalisation représenté, la surface inférieure 8 du plateau 1 est équipée de :
- deux loquets 31 de verrouillage en position horizontale, agencés pour s'engager réversiblement sur respectivement une traverse latérale du cadre supérieur 7 dans ladite position horizontale ; et
- deux loquets 32 de verrouillage en position dressée, agencés pour s'engager réversiblement sur respectivement un organe 16 dans ladite position dressée.

## Revendications

1. Table de jeu comprenant un plateau (1) portant une surface supérieure de jeu qui s'étend transversalement de part et d'autre d'un axe longitudinal (18) dudit plateau, ladite table comprenant une structure de piètement présentant un cadre supérieur (7) sur lequel ledit plateau est monté par l'intermédiaire d'un mécanisme de basculement autour dudit axe longitudinal entre une position horizontale d'utilisation et une position dressée de rangement, ladite structure de piètement comprenant un cadre d'appui (11) au sol et un chariot (12) de roulement sur ledit sol, ladite table étant **caractérisée en ce que** le cadre d'appui (11) et le chariot de roulement (12) sont associés par un mécanisme d'articulation (24) permettant leur déplacement relatif réversiblement entre :
- une configuration stable de la structure de piètement dans laquelle le cadre d'appui (11) est disposé sur le sol en dessous du chariot de roulement (12) qui est disposé à distance dudit sol ; et
- une configuration de déplacement de la structure de piètement dans laquelle le chariot de roulement (12) est disposé sur le sol en dessous du cadre d'appui (11) qui est disposé à distance dudit sol ;
ladite table comprenant un dispositif d'actionnement du mécanisme d'articulation (24), ledit dispositif d'actionnement comprenant au moins un organe (16) reliant le plateau (1) et le mécanisme d'articulation (24), organe étant déplacé par le basculement dudit plateau en étant agencé pour mettre la structure de piètement en configuration stable - respectivement de déplacement - lorsque le plateau (1) est en position d'utilisation - respectivement de rangement.

2. Table de jeu selon la revendication 1, **caractérisée en ce que** le plateau (1) présente une surface inférieure (8) équipée d'au moins une platine (9) qui est montée en rotation sur le cadre supérieur (7) pour former le mécanisme de basculement.

3. Table de jeu selon l'une des revendications 1 ou 2, **caractérisée en ce que** le cadre supérieur (7) présente deux traverses latérales (7a) reliées par un longeron longitudinal (7b) pour présenter une configuration en U s'étendant horizontalement, les extrémités libres desdites traverses étant équipées du mécanisme de basculement du plateau (1) entre une position horizontale en appui sur le cadre supérieur (7) et une position verticale de rangement perpendiculairement audit cadre.

4. Table de jeu selon l'une quelconque des revendications 1 à 3, **caractérisée en ce que** le cadre supérieur (7) est relié au cadre d'appui (11) par deux poteaux verticaux (13).

5. Table de jeu selon l'une quelconque des revendications 1 à 4, **caractérisée en ce que** le plateau (1) est équipé d'au moins un moyen de verrouillage (31, 32) dans l'une de ses position horizontale d'utilisation ou dressée de rangement.

6. Table de jeu selon l'une quelconque des revendications 1 à 5, **caractérisée en ce que** l'organe (16) présente une extrémité supérieure qui est montée en rotation sous le plateau (1) selon un axe longitudinal de rotation (17) qui est décalé de l'axe de basculement (18) pour induire le déplacement dudit organe par le basculement dudit plateau.

7. Table de jeu selon l'une quelconque des revendications 1 à 6, **caractérisée en ce que** le cadre d'appui (11) est relié fixement au cadre supérieur (7), le chariot de roulement (12) étant déplaçable par rapport audit cadre d'appui au moyen du mécanisme d'articulation (24) entre une position haute et une position basse pour pouvoir mettre la structure de piètement réversiblement en configuration stable et de déplacement.

8. Table de jeu selon l'une quelconque des revendications 1 à 7, **caractérisée en ce que** le cadre d'appui (11) porte au moins un pied (19) dont la hauteur est ajustable.

9. Table de jeu selon l'une quelconque des revendications 1 à 8, **caractérisée en ce que** le chariot de roulement (12) porte des roues (23) qui sont disposées pour permettre le déplacement de ladite table par roulement sur le sol.

10. Table de jeu selon l'une quelconque des revendications 1 à 9, **caractérisée en ce que** le chariot de roulement (12) et le cadre d'appui (11) présentent chacun deux traverses latérales (11a, 12a) qui sont espacées longitudinalement, le mécanisme d'articulation (24) étant disposé à l'interface des traverses (11a, 12a) du cadre d'appui (11) et du chariot de roulement (12).

11. Table de jeu selon la revendication 10, **caractérisée en ce que** les traverses (12a) du chariot de roulement (12) sont reliées fixement par au moins un longeron (12b), les traverses (11a) du cadre d'appui (11) étant associées à respectivement une traverse (12a) du chariot de roulement (12).

12. Table de jeu selon l'une quelconque des revendications 1 à 11, **caractérisée en ce que** le mécanisme d'articulation (24) comprend une barre d'actionnement (25) sur laquelle l'extrémité inférieure de l'organe (16) est montée en rotation, ladite barre présentant deux extrémités latérales portant chacune une biellette (26) en rotation suivant un premier axe longitudinal (27), chacune desdites biellettes étant montée en rotation suivant un deuxième axe longitudinal (28) de rotation sur le cadre d'appui (11) et suivant un troisième axe longitudinal (29) de rotation sur le chariot de roulement (12), lesdits axes de rotation étant disposés de sorte que le déplacement de la barre (25) par l'organe (16) induise le déplacement relatif du chariot de roulement (12) et du cadre d'appui (11).

13. Table de jeu selon la revendication 12, **caractérisée en ce que** chaque biellette (26) présente un premier bras (26a) s'étendant entre le premier axe de rotation (27) et un pivot (30) définissant l'un parmi les deuxième (28) et troisième (29) axe de rotation, et un deuxième bras (26b) s'étendant entre ledit pivot et l'autre parmi les deuxième (28) et troisième (29) axe de rotation.

14. Table de jeu selon la revendication 13, **caractérisée en ce que** les biellettes (26) sont agencées pour transformer le déplacement de l'organe (16) en un déplacement vertical de la barre d'actionnement (25) par rotation desdites biellettes autour du pivot (30) pour passer réversiblement d'une configuration dans laquelle l'axe (29) porté par le deuxième bras est disposé au dessous dudit pivot à une configuration dans laquelle ledit axe est disposé au dessus dudit pivot.

15. Table de jeu selon l'une quelconque des revendications 1 à 14, **caractérisée en ce que** la surface supérieure de jeu (2) est agencée pour la pratique du billard.

## Patentansprüche

1. Spieltisch, umfassend eine Tischplatte (1), die eine obere Spielfläche trägt, die sich quer zu beiden Seiten einer Längsachse (18) der Tischplatte erstreckt, wobei der Tisch eine Gestellstruktur mit einem oberen Rahmen (7) umfasst, an dem die Tischplatte über einen Zwischenmechanismus zum Kippen um die Längsachse zwischen einer horizontalen Gebrauchsstellung und einer aufgerichteten Aufbewahrungsstellung montiert ist, wobei die Gestellstruktur einen Stützrahmen (11) auf dem Boden und einen Rollwagen (12) auf dem Boden umfasst, wobei der Tisch **dadurch gekennzeichnet ist, dass** der Stützrahmen (11) und der Rollwagen (12) durch einen Gelenkmechanismus (24) verbunden sind, der ihre relative Bewegung reversibel ermöglicht zwischen:
- einer stabile Konfiguration der Gestellstruktur, bei der der Stützrahmen (11) auf dem Boden unterhalb des Rollwagens (12) angeordnet ist, der in einem Abstand von dem Boden angeordnet ist; und
- eine Bewegungskonfiguration der Gestellstruktur, bei der der Rollwagen (12) auf dem Boden unterhalb des Stützrahmens (11) angeordnet ist, der in einem Abstand von dem Boden angeordnet ist ;
der Tisch eine Betätigungsvorrichtung für den Gelenkmechanismus (24) umfasst, wobei die Betätigungsvorrichtung mindestens ein Organ (16) umfasst, das die Tischplatte (1) und den Gelenkmechanismus (24) verbindet, wobei das Organ durch das Kippen der Tischplatte bewegt wird, indem es eingerichtet wird, um die Gestellstruktur in eine stabile- bzw. Bewegungskonfiguration zu bringen, wenn die Tischplatte (1) in der Gebrauchs- bzw. Aufbewahrungsstellung ist.

2. Spieltisch nach Anspruch 1, **dadurch gekennzeichnet, dass** die Tischplatte (1) eine untere Fläche (8) aufweist, die mit mindestens einer Platte (9) ausgestattet ist, die drehbar am oberen Rahmen (7) montiert ist, um den Kippmechanismus zu bilden.

3. Spieltisch nach einem der Ansprüche 1 oder 2, **dadurch gekennzeichnet, dass** der obere Rahmen (7) zwei seitliche Querträger (7a) aufweist, die durch einen Längsträger (7b) verbunden sind, um eine sich horizontal erstreckende U-förmige Konfiguration aufzuweisen, wobei die freien Enden der Querträger mit dem Kippmechanismus der Tischplatte (1) zwischen einer horizontalen, sich auf den oberen Rahmen (7) stützenden Stellung und einer vertikalen, zum Rahmen senkrechten Aufbewahrungsstellung ausgestattet sind.

4. Spieltisch nach einem der Ansprüche 1 bis 3, **dadurch gekennzeichnet, dass** der obere Rahmen (7) durch zwei senkrechte Pfosten (13) mit dem Stützrahmen (11) verbunden ist.

5. Spieltisch nach einem der Ansprüche 1 bis 4, **dadurch gekennzeichnet, dass** die Tischplatte (1) mit mindestens einem Verriegelungsmittel (31, 32) in einer ihrer horizontalen Gebrauchsstellung oder ihrer aufgerichteten Aufbewahrungsstellung ausgestattet ist.

6. Spieltisch nach einem der Ansprüche 1 bis 5, **dadurch gekennzeichnet, dass** das Organ (16) ein oberes Ende aufweist, das drehbar unter der Tischplatte (1) entlang einer Längsdrehachse (17) montiert ist, die von der Kippachse (18) versetzt ist, um die Bewegung des Organs durch das Kippen der Tischplatte zu bewirken.

7. Spieltisch nach einem der Ansprüche 1 bis 6, **dadurch gekennzeichnet, dass** der Stützrahmen (11) fest mit dem oberen Rahmen (7) verbunden ist, wobei der Rollwagen (12) mittels des Gelenkmechanismus (24) zwischen einer oberen Stellung und einer unteren Stellung in Bezug auf den Stützrahmen verschiebbar ist, um in der Lage zu sein, die Gestellstruktur reversibel in eine stabile und Bewegungs-Konfiguration zu bringen.

8. Spieltisch nach einem der Ansprüche 1 bis 7, **dadurch gekennzeichnet, dass** der Stützrahmen (11) mindestens einen Fuß (19) trägt, dessen Höhe einstellbar ist.

9. Spieltisch nach einem der Ansprüche 1 bis 8, **dadurch gekennzeichnet, dass** der Rollwagen (12) Räder (23) trägt, die angeordnet sind, um die Bewegung des Tisches durch Rollen auf dem Boden zu erlauben.

10. Spieltisch nach einem der Ansprüche 1 bis 9, **dadurch gekennzeichnet, dass** der Rollwagen (12) und der Stützrahmen (11) jeweils zwei seitliche Querträger (11a, 12a) aufweisen, die in Längsrichtung im Abstand angeordnet sind, wobei der Gelenkmechanismus (24) an der Schnittstelle der Querträger (11a, 12a) des Stützrahmens (11) und des Rollwagens (12) angeordnet ist.

11. Spieltisch nach Anspruch 10, **dadurch gekennzeichnet, dass** die Querträger (12a) des Rollwagens (12) durch mindestens einen Längsträger (12b) fest miteinander verbunden sind, wobei die Querträger (11a) des Stützrahmens (11) jeweils einem Querträger (12a) des Rollwagens (12) zugeordnet sind.

12. Spieltisch nach einem der Ansprüche 1 bis 11, **dadurch gekennzeichnet, dass** der Gelenkmechanismus (24) eine Betätigungsstange (25) umfasst, auf der das untere Ende des Organs (16) drehbar montiert ist, wobei die Stange zwei seitliche Enden aufweist, die jeweils einen drehbaren Schwingarm (26) entlang einer ersten Längsachse (27) tragen, wobei jeder der Schwingarme drehbar entlang einer zweiten Längsachse (28) zur Drehung auf dem Stützrahmen (11) und entlang einer dritten Längsachse (29) zur Drehung auf dem Rollwagen (12) montiert ist, wobei die Drehachsen so angeordnet sind, dass die Bewegung der Stange (25) durch das Organ (16) die relative Bewegung des Rollwagens (12) und des Stützrahmens (11) bewirkt.

13. Spieltisch nach Anspruch 12, **dadurch gekennzeichnet, dass** jeder Schwingarm (26) einen ersten Arm (26a), der sich zwischen der ersten Drehachse (27) und einem Drehpunkt (30) erstreckt, der eine der zweiten (28) und dritten (29) Drehachse definiert, und einen zweiten Arm (26b) aufweist, der sich zwischen dem Drehpunkt und der anderen der zweiten (28) und dritten (29) Drehachse erstreckt.

14. Spieltisch nach Anspruch 13, **dadurch gekennzeichnet, dass** die Schwingarme (26) so eingerichtet sind, dass sie die Bewegung des Organs (16) in eine vertikale Bewegung der Betätigungsstange (25) durch Drehung der Schwingarme um den Drehpunkt (30) umwandeln, um reversibel von einer Konfiguration, in der die Achse (29), die vom zweiten Arm getragen wird, unterhalb des Drehpunkts angeordnet ist, in eine Konfiguration überzugehen, in der die Achse oberhalb des Drehpunkts angeordnet ist.

15. Spieltisch nach einem der Ansprüche 1 bis 14, **dadurch gekennzeichnet, dass** die obere Spielfläche (2) zum Spielen von Billard eingerichtet ist.

## Claims

1. A games table comprising a table top (1) carrying an upper games surface (2) which extends transversely on either side of a longitudinal axis (18) of said table top, said table comprising a base structure having an upper frame (7) on which said table top is mounted via a tilting mechanism about said longitudinal axis between a horizontal use position and a raised storage position, said base structure comprising a support frame (11) on the ground and a carriage (12) for rolling on said ground, said table being **characterised in that** the support frame (11) and the rolling carriage (12) are connected by an articulation mechanism (24) enabling their relative movement reversibly between:
- a stable configuration of the base structure in which the support frame (11) is arranged on the ground below the rolling carriage (12) which is arranged at a distance from said ground; and
- a movement configuration of the base structure in which the rolling carriage (12) is arranged on the ground below the support frame (11) which is arranged at a distance from said ground;
said table comprising a device for actuating the articulation mechanism (24), said actuating device comprising at least one member (16) connecting the table top (1) and the articulation mechanism (24), said member being moved by tilting said table top while being designed to place the base structure in a stable - respectively movement - configuration when the table top (1) is in the use - respectively storage - position.

2. The games table according to claim 1, **characterised in that** the table top (1) has a lower surface (8) equipped with at least one subplate (9) which is rotatably mounted on the upper frame (7) to form the tilting mechanism.

3. The games table according to either of claims 1 and 2, **characterised in that** the upper frame (7) has two lateral cross-members (7a) connected by a longitudinal member (7b) so as to have a U-shaped configuration extending horizontally, the free ends of said cross-members being equipped with the mechanism for tilting the table top (1) between a horizontal position bearing on the upper frame (7) and a vertical position for storage perpendicularly to said frame.

4. The games table according to any one of claims 1 to 3, **characterised in that** the upper frame (7) is linked to the support frame (11) by two vertical posts (13).

5. The games table according to any one of claims 1 to 4, **characterised in that** the table top (1) is equipped with at least one locking means (31, 32) in one of its horizontal use position or raised storage position.

6. The games table according to any one of claims 1 to 5, **characterised in that** the member (16) has an upper end which is rotatably mounted under the table top (1) according to a longitudinal axis of rotation (17) which is offset from the tilt axis (18) to cause the movement of said member by tilting said table top.

7. The games table according to any one of claims 1 to 6, **characterised in that** the support frame (11) is fixedly linked to the upper frame (7), the rolling carriage (12) being movable relative to said support frame by means of the articulation mechanism (24) between a high position and a low position to be able to set the base structure reversibly in the stable and movement configuration.

8. The games table according to any one of claims 1 to 7, **characterised in that** the support frame (11) carries at least one foot (19) whose height is adjustable.

9. The games table according to any one of claims 1 to 8, **characterised in that** the rolling carriage (12) carries wheels (23) which are arranged so as to enable the movement of the said table by rolling on the ground.

10. The games table according to any one of claims 1 to 9, **characterised in that** each of the rolling carriage (12) and the support frame (11) has two lateral cross-members (11a, 12a) which are spaced apart longitudinally, the articulation mechanism (24) being arranged at the interface of the cross-members (11a, 12a) of the support frame (11) and of the rolling carriage (12).

11. The games table according to claim 10, **characterised in that** the cross-members (12a) of the rolling carriage (12) are fixedly linked by at least one longitudinal member (12b), the cross-members (11a) of the support frame (11) being respectively associated with a cross-member (12a) of the rolling carriage (12).

12. The games table according to any one of claims 1 to 11, **characterised in that** the articulation mechanism (24) comprises an actuating bar (25) on which the lower end of the member (16) is rotatably mounted, said bar having two lateral ends each carrying a connecting rod (26) in rotation according to a first longitudinal axis (27), each of said connecting rods being rotatably mounted according to a second longitudinal axis (28) of rotation on the support frame (11) and according to a third longitudinal axis (29) of rotation on the rolling carriage (12), said axes of rotation being arranged so that the movement of the bar (25) by the member (16) causes the relative movement of the rolling carriage (12) and of the support frame (11).

13. The games table according to claim 12, **characterised in that** each connecting rod (26) has a first arm (26a) extending between the first axis of rotation (27) and a pivot (30) defining one amongst the second (28) and third (29) axes of rotation, and a second arm (26b) extending between said pivot and the other one amongst the second (28) and third (29) axes of rotation.

14. The games table according to claim 13, **characterised in that** the connecting rods (26) are arranged so as to transform the movement of the member (16) into a vertical movement of the actuating bar (25) by rotation of said connecting rods about the pivot (30) to reversibly switch from a configuration in which the axis (29) carried by the second arm is arranged below said pivot into a configuration in which said axis is arranged above said pivot.

15. The games table according to any one of claims 1 to 14, **characterised in that** the upper games surface (2) is arranged for playing billiards.
